# EUROPEAN PATENT APPLICATION

(11) **EP 4 618 214 A1**
(43) Date of publication of application: **17.09.2025**
(21) Application number: 24891872.4
(22) Date of filing: 14.11.2024
(51) Int. Cl.: H01M 10/052, H01M 4/133, H01M 4/587, H01M 4/38, H01M 4/485, H01M 4/58, H01M 4/40, H01M 4/525, H01M 4/505

(54) **LITHIUM SECONDARY BATTERY**

(30) Priority: 16.11.2023 KR 20230159140; 13.11.2024 KR 20240161062
(71) Applicant: LG Energy Solution, Ltd., Seoul 07335 (KR)
(72) Inventor: YUN, Hyunwoong, Daejeon 34122 (KR); CHO, Il Young, Daejeon 34122 (KR); KIM, Yojin, Daejeon 34122 (KR)
(74) Representative: Hoffmann Eitle
(86) International application number: PCT/KR2024/096555
(87) International publication number: WO 2025/105926

(57) **Abstract**

The present application relates to a lithium secondary battery.

## Description

### [Technical Field]

This application claims priority to and the benefit of Korean Patent Application No. 10-2023-0159140 filed in the Korean Intellectual Property Office on November 16, 2023, the entire contents of which are incorporated herein by reference.

The present application relates to a lithium secondary battery.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or SiOx, which has a 10 or more-fold higher capacity than a graphite-based material, as a negative electrode active material. However, the silicon-based compound, which is a high-capacity material, is a material having a high capacity compared to graphite used in the related art, and has excellent capacity characteristics, but the volume rapidly expands during the charging process to disconnect the conductive path, resulting in deterioration in battery characteristics, and accordingly, the capacity decreases from the initial stage. In addition, for a silicon-based negative electrode, when the charging and discharging cycle is repeated, lithium ions are not uniformly charged in the depth direction of the negative electrode and reactions proceed on the surface, so that as surface degradation is accelerated, the performance needs to be improved in terms of battery cycle.

Thus, to solve the above problem when the silicon-based compound is used as a negative electrode active material, various measures such as a measure of adjusting the driving potential, additionally a measure of suppressing the volume expansion itself such as a method of further coating an active material layer with a thin film and a method of controlling the particle diameter of the silicon-based compound, or the development of a binder capable of suppressing the volume expansion of the silicon-based compound to prevent the conductive path from being disconnected have been discussed. Furthermore, studies to complement the service life characteristics of the silicon-based negative electrode by limiting the proportion of silicon-based active material used during initial charging and discharging by a pre-lithiation method of a silicon-based active material layer, and imparting a reservoir role have also been conducted.

However, the above measures have limitations in their application because they may deteriorate the performance of a battery, so that there is still a limitation to the commercialization of negative electrode batteries having a high content of silicon-based compounds.

Thus, as recent research has confirmed that when artificial graphite is used as a negative electrode, the capacity deteriorates compared to silicon-based negative electrodes, but the cell characteristics are excellent, the amount of artificial graphite used has been increased while reducing the use of natural graphite. However, from the viewpoint of cost, artificial graphite has a disadvantage in that the processing cost is higher than that of natural graphite because the coke needs to be fired and graphitized.

Therefore, the development of lithium secondary batteries that can reduce costs and show performance equal to or better than that of existing batteries is being continuously conducted.

### <Related Art Document>

(Patent Document 1) Japanese Patent Application Laid-Open No. 2009-080971

### [Detailed Description of the Invention]

### [Technical Problem]

The present application has found, through research, a cell that reduces the amount of artificial graphite used in terms of costs while using a carbon-based active material in the negative electrode, and simultaneously can implement characteristics equal to or better than those of existing cells even though the amount of artificial graphite is reduced.

Accordingly, the present application has been made in an effort to provide a lithium secondary battery in which an active material with a specific composition is used for the negative electrode and an NP ratio is adjusted.

### [Technical Solution]

An exemplary embodiment of the present specification provides a lithium secondary battery including a positive electrode; a negative electrode; a separator interposed between the positive electrode and the negative electrode; and an electrolyte, in which the negative electrode includes a negative electrode current collector layer; and a negative electrode active material layer including a negative electrode active material layer composition provided on one surface or both surfaces of the negative electrode current collector layer, the negative electrode active material layer composition includes a carbon-based active material, an artificial graphite having an initial capacity of 330 mAh/g or more is included in an amount of 1 part by weight or more and 50 parts by weight or less based on 100 parts by weight of the carbon-based active material, and an NP ratio is 110 or more.

### [Advantageous Effects]

In the related art, it was confirmed that artificial graphite has excellent cell characteristics, so the amount of artificial graphite used was increased while reducing the amount of natural graphite used, but the artificial graphite has a problem of being expensive because the processing costs are high in terms of cost and mass production.

Accordingly, in order to solve the problem of cost and mass production, the present application designed a cell by reducing the amount of artificial graphite used and simultaneously increasing the amount of natural graphite, and solved the resulting problems by adjusting the NP ratio.

That is, the lithium secondary battery according to the present application includes an artificial graphite having an initial capacity of 330 mAh/g or more in an amount of 1 part by weight or more and 50 parts by weight or less based on 100 parts by weight of a carbon-based active material, and can have a large amount of residual negative electrode as the NP ratio is adjusted to 110 or more, so that the lithium secondary battery has the characteristics that cell degradation is not accelerated even though the artificial graphite is used within the above range, and thus the service life characteristics of the battery can be secured.

### [Brief Description of Drawings]

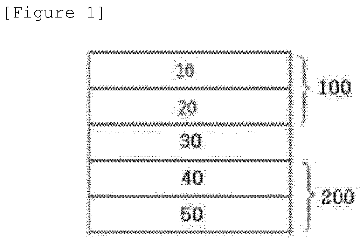

FIG. 1 is a view illustrating the stacking structure of a lithium secondary battery according to an exemplary embodiment of the present application.

### <Explanation of Reference Numerals and Symbols>

- 10:: Negative electrode current collector layer
- 20:: Negative electrode active material layer
- 30:: Separator
- 40:: Positive electrode active material layer
- 50:: Positive electrode current collector layer
- 100:: Negative electrode
- 200:: Positive electrode

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less.'

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the particle diameter distribution, and means the particle diameter at the n% point of the cumulative distribution of the number of particles according to the particle diameter. That is, D50 is the particle diameter (average particle diameter, median particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle diameter distribution may be measured using a laser diffraction method. Specifically, after a powder to be measured is dispersed in a dispersion medium, a particle diameter distribution is calculated by introducing the resulting dispersion into a commercially available laser diffraction particle diameter measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer.'

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a lithium secondary battery including a positive electrode; a negative electrode; a separator interposed between the positive electrode and the negative electrode; and an electrolyte, in which the negative electrode includes a negative electrode current collector layer; and a negative electrode active material layer including a negative electrode active material layer composition provided on one surface or both surfaces of the negative electrode current collector layer, the negative electrode active material layer composition includes a carbon-based active material, an artificial graphite having an initial capacity of 330 mAh/g or more is included in an amount of 1 part by weight or more and 50 parts by weight or less based on 100 parts by weight of the carbon-based active material, and an NP ratio is 110 or more.

The lithium secondary battery according to the present application includes an artificial graphite having an initial capacity of 330 mAh/g or more in an amount of 1 part by weight or more and 50 parts by weight or less based on 100 parts by weight of a carbon-based active material, and can have a large amount of residual negative electrode as the NP ratio is adjusted to 110 or more, so that the lithium secondary battery has the characteristics that cell degradation is not accelerated even though the artificial graphite is used within the above range, and thus the service life characteristics of the battery can be secured.

FIG. 1 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

Hereinafter, the lithium secondary battery of the present invention will be described in more detail.

In the present application, the negative electrode includes a negative electrode current collector layer; and a negative electrode active material layer including a negative electrode active material layer composition provided on one surface or both surfaces of the negative electrode current collector layer.

In the present application, the negative electrode active material layer composition includes a carbon-based active material, and may include an artificial graphite having an initial capacity of 330 mAh/g or more in an amount of 1 part by weight or more and 50 parts by weight or less based on 100 parts by weight of the carbon-based active material.

In another embodiment, the negative electrode active material layer composition includes a carbon-based active material, and may include an artificial graphite having an initial capacity of 330 mAh/g or more in an amount of 1 part by weight or more and 50 parts by weight or less, specifically 10 parts by weight or more and 50 parts by weight or less, and more specifically 30 parts by weight or more and 50 parts by weight or less based on 100 parts by weight of the carbon-based active material.

In an exemplary embodiment of the present application, representative examples of the carbon-based active material include natural graphite, artificial graphite, expandable graphite, carbon fiber, non-graphitizable carbon, carbon black, carbon nanotubes, fullerene, activated carbon, or the like, and the carbon-based active material can be used without limitation as long as the carbon-based active material is typically used in a carbon material for a lithium secondary battery, and specifically may be processed into a form of a spherical or dot shape and used.

The present application may have a large amount of residual negative electrode as the NP ratio is adjusted to 110 or more, and thus has characteristics in that even though artificial graphite is used in the above range, cell degradation is not accelerated, and thus the service life characteristics can be secured.

In the present application, the artificial graphite may have an initial capacity of 330 mAh/g or more.

In another exemplary embodiment, the artificial graphite may have an initial capacity of 330 mAh/g or more, preferably 335 mAh/g or more, and 450 mAh/g or less, and preferably 400 mAh/g or less.

The artificial graphite according to the present application has an initial capacity within the above range, and corresponds to a material in which the initial capacity is set to a high value, unlike a type such as mesocarbon which is a type of artificial graphite. In this case, the artificial graphite according to the present application has better capacity characteristics than those of a general artificial graphite.

In an exemplary embodiment of the present application, provided is a lithium secondary battery in which the carbon-based active material includes an artificial graphite having an initial capacity of 330 mAh/g or more and natural graphite, and the weight ratio of the artificial graphite to the natural graphite is 1:99 to 50:50 based on 100 parts by weight of the carbon-based active material.

That is, the lithium secondary battery according to the present invention is characterized in that a carbon-based active material is used as the negative electrode active material, and the artificial graphite that satisfies the specific initial capacity as described above and natural graphite are blended at the above ratio and used. Specifically, using 100% artificial graphite is excellent in terms of resistance characteristics and service life characteristics, but such an artificial graphite has characteristics that the artificial graphite is not suitable for mass production because the artificial graphite is expensive and requires much time to processing. Accordingly, the present application uses a blend of natural graphite at the above ratio, and the main object of the present invention is to solve the resulting performance degradation by adjusting the NP ratio.

In the present application, the artificial graphite having an initial capacity of 330 mAh/g or more and the natural graphite may be crystalline carbon (graphite).

Carbon-based active materials may be divided into crystalline carbon (graphite) and amorphous carbon, and amorphous carbon may be further divided into hard carbon and soft carbon. The artificial graphite according to the present application and the natural graphite are mainly characterized by using crystalline carbon (graphite).

The carbon-based active material according to the present invention is a negative electrode material having a higher capacity than soft carbon or hard carbon, has excellent initial efficiency, and also has excellent cycle characteristics.

In an exemplary embodiment of the present application, provided is a lithium secondary battery in which the negative electrode active material layer composition further includes one or more selected from the group consisting of a silicon-based active material, a tin-based active material, a metal-based active material capable of forming an alloy with lithium, a lithium titanium oxide, and a lithium-containing nitride.

In particular, the negative electrode active material layer composition of the present application includes a carbon-based active material and a silicon-based active material, and may include the silicon-based active material in an amount of 50 parts by weight or less based on 100 parts by weight of the negative electrode active material layer composition.

The negative electrode active material layer composition of the present application includes a carbon-based active material and a silicon-based active material, and may include the silicon-based active material in an amount of 30 parts by weight or less, preferably 20 parts by weight or less, and in an amount of 1 part by weight or more and 10 parts by weight or more, based on 100 parts by weight of the negative electrode active material layer composition.

In the present application, the content of artificial graphite in the carbon-based active material is reduced, and a problem in that resistance characteristics and service life characteristics deteriorate may occur in some cases. Accordingly, when a carbon-based active material and a silicon-based active material or a lithium titanium oxide are mixed and used in the negative electrode active material layer composition as described above, the above-described problems may be solved.

In an exemplary embodiment of the present application, the silicon-based active material may include one or more selected from the group consisting of SiOx (x=0), SiOx (0<x<2), SiC, and a Si alloy.

In an exemplary embodiment of the present application, the silicon-based active material includes one or more selected from the group consisting of SiOx (0<x<2), SiC, and a Si alloy, and may include SiOx (0<x<2) in an amount of 1 part by weight or more based on 100 parts by weight of the silicon-based active material.

In another exemplary embodiment, the silicon-based active material includes one or more selected from the group consisting of SiOx (0<x<2), SiC, and a Si alloy, and may include SiOx (0<x<2) in an amount of 1 part by weight or more, 30 parts by weight or more, and 99 parts by weight or less, based on 100 parts by weight of the silicon-based active material.

In still another exemplary embodiment, the silicon-based active material may include SiOx (0<x<2).

In yet another exemplary embodiment, the silicon-based active material may be composed of SiOx (0<x<2).

In an exemplary embodiment of the present application, the negative electrode active material layer composition may include a negative electrode conductive material; and a negative electrode binder.

In the related art, it was common to use only a graphite-based compound as a negative electrode active material, but recently, as the demand for a high-capacity battery has increased, attempts to mix and use a silicon-based active material have been increased in order to increase the capacity. However, in the case of the graphite-based active material or silicon-based active material, the volume expands rapidly in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 m²/g or more and 70 m²/g or less, preferably 45 m²/g or more and 65 m²/g or less, and more preferably 50 m²/g or more and 60 m²/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present invention, as a specific silicon-based active material is used, it is possible to reduce the functional group content of the dotted conductive material, and accordingly, the present invention has an effect excellent in improving dispersibility.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the conductive material may include a planar conductive material.

The planar conductive material may serve to improve conductivity by increasing the surface contact between silicon particles in the negative electrode and simultaneously suppress the disconnection of the conductive path due to the volume expansion. The planar conductive material may be expressed as a plate-like conductive material or a bulk conductive material.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 µm to 7 µm, specifically 3 µm to 6 µm, and more specifically 3.5 µm to 5 µm. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 µm or more and 2.0 µm or less, a D50 of 2.5 µm or more and 3.5 µm or less, and a D90 of 6.5 µm or more and 15.0 µm or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 0.25m²/g or more.

In another exemplary embodiment, the planar conductive material may have a BET specific surface area of 1m²/g or more and 500 m²/g or less, preferably 5m²/g or more and 300m²/g or less, and more preferably 5m²/g or more and 250m²/g or less.

As the planar conductive material according to the present application, it is possible to use a high specific surface area planar conductive material; or a low specific surface area planar conductive material.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300m²/g or less.

In yet another exemplary embodiment, the planar conductive material is a low specific surface area planar conductive material, and the BET specific surface area may satisfy a range of 1 m²/g or more and 40 m²/g or less, preferably 5 m²/g or more and 30 m²/g or less, and more preferably 5 m²/g or more and 25 m²/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In an exemplary embodiment of the present application, the negative electrode conductive material may be included in an amount of 0.1 parts by weight or more and 40 parts by weight or less based on 100 parts by weight of the negative electrode active material layer composition.

In another exemplary embodiment, the negative electrode conductive material may be included in an amount of 0.1 parts by weight or more and 40 parts by weight or less, preferably 0.2 parts by weight or more and 30 parts by weight or less, more preferably 0.4 parts by weight or more and 25 parts by weight or less, and most preferably 0.4 parts by weight or more and 10 parts by weight or less, based on 100 parts by weight of the negative electrode active material layer composition.

In an exemplary embodiment of the present application, the negative electrode conductive material may include a planar conductive material; and a linear conductive material.

In an exemplary embodiment of the present application, the negative electrode conductive material may include a planar conductive material; and a linear conductive material.

In an exemplary embodiment of the present application, the negative electrode conductive material may include a dotted conductive material; and a linear conductive material.

In an exemplary embodiment of the present application, the negative electrode conductive material may include a dotted conductive material.

In an exemplary embodiment of the present application, the negative electrode conductive material may include the planar conductive material; and the linear conductive material in an amount of 80 parts by weight or more and 99.9 parts by weight or less; and 0.1 parts by weight or more and 20 parts by weight or less, respectively, based on 100 parts by weight of the negative electrode conductive material.

In another exemplary embodiment, the negative electrode conductive material may include the planar conductive material in an amount of 80 parts by weight or more and 99.9 parts by weight or less, preferably 85 parts by weight or more and 99.9 parts by weight or less, and more preferably 95 parts by weight or more and 98 parts by weight or less, based on 100 parts by weight of the negative electrode conductive material.

In still another exemplary embodiment, the negative electrode conductive material may include the linear conductive material in an amount of 0.1 parts by weight or more and 20 parts by weight or less, preferably 0.1 part by weight or more and 15 parts by weight or less, and more preferably 0.2 parts by weight or more and 5 parts by weight or less, based on 100 parts by weight of the negative electrode conductive material.

In an exemplary embodiment of the present application, the negative electrode conductive material may include the dotted conductive material; and the linear conductive material in an amount of 80 parts by weight or more and 99.9 parts by weight or less; and 0.1 parts by weight or more and 20 parts by weight or less, respectively, based on 100 parts by weight of the negative electrode conductive material.

In an exemplary embodiment of the present application, as the negative electrode conductive material includes a planar conductive material and a linear conductive material; or a dotted conductive material and a linear conductive material, and the planar conductive material and the linear conductive material; or the dotted conductive material and the linear conductive material each satisfy the composition and ratio, the negative electrode conductive material has a feature in which output characteristics at a high C-rate are excellent and the amount of high-temperature gas generated is reduced because the service life characteristics of the existing lithium secondary battery are not greatly affected and points where the battery can be charged and discharged are increased particularly, when a planar conductive material and a linear conductive material are included.

In an exemplary embodiment of the present application, the negative electrode conductive material may be composed of a linear conductive material.

In particular, when the linear conductive material is used alone, the electrode structure may be improved because the electrode tortuosity, which is a problem with the carbon-based or silicon-based negative electrode, may be simplified, and accordingly, the negative electrode conductive material has a feature capable of reducing the movement resistance of lithium ions in the electrode.

In an exemplary embodiment of the present application, when the negative electrode conductive material includes the linear conductive material alone, the negative electrode conductive material may be included in an amount of 0.1 parts by weight or more and 5 parts by weight or less, preferably 0.2 parts by weight or more and 3 parts by weight or less, and more preferably 0.4 parts by weight or more and 1 parts by weight or less, based on 100 parts by weight of the negative electrode active material layer composition.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 or less, and more preferably 20 parts by weight or less, and may be included in an amount of 5 parts by weight or more and 10 parts by weight or more, based on 100 parts by weight of the negative electrode active material layer composition.

In an exemplary embodiment of the present application, provided is a lithium secondary battery, in which the negative electrode current collector layer has a thickness of 1 µm or more and 100 µm or less, and the negative electrode active material layer has a thickness of 5 µm or more and 500 µm or less.

The negative electrode current collector layer generally has a thickness of 1 µm to 100 µm. The negative electrode current collector layer is not particularly limited as long as the negative electrode current collector layer has high conductivity without causing a chemical change in the battery, and for example, it is possible to use copper, stainless steel, aluminum, nickel, titanium, fired carbon, copper or stainless steel of which the surface is treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the active material; the conductive material; and the binder included in the negative electrode active material layers, and accordingly, the electric conductivity and resistance in the electrode are characterized by having appropriate ranges.

In an exemplary embodiment of the present application, the positive electrode includes a positive electrode current collector layer; and a positive electrode active material layer including a positive electrode active material layer composition provided on one surface or both surfaces of the positive electrode current collector layer, and the positive electrode active material layer composition includes a positive electrode active material.

In the positive electrode, the positive electrode current collector layer is not particularly limited as long as the positive electrode current collector layer has conductivity without causing a chemical change to the battery, and for example, it is possible to use stainless steel, aluminum, nickel, titanium, fired carbon, or aluminum or stainless steel of which the surface is treated with carbon, nickel, titanium, silver, and the like. Further, the positive electrode current collector layer may typically have a thickness of 3 to 500 µm, and the adhesion of the positive electrode active material may also be enhanced by forming fine irregularities on the surface of the current collector. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The present application provides a lithium secondary battery, in which the positive electrode active material includes one or more selected from the group consisting of LiNiₓCo_{y}Mn_{z}O₂ (x+y+z=1); LiNiₐCo_{b}Mn_{c}Al_{d}O₂(a+b+c+d=1); LiMn₂O₄; LiNi_{0.5}Mn_{1.5}O₂; and LiMₓFe_{y}PO₄ (M: a transition metal, x+y=1).

In the present application, provided is a lithium secondary battery, in which the positive electrode active material layer composition includes LiNiₓCo_{y}Mn_{z}O₂ (x+y+z=1); or LiNiₐCo_{b}Mn_{c}Al_{d}O₂(a+b+c+d=1), z is 0.5 or more, and c is 0.4 or more.

That is, the lithium secondary battery according to the present application is characterized by using a Mn-rich positive electrode active material.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

In the present application, the lithium secondary battery may have an NP ratio of 110 or more.

In another exemplary embodiment, the NP ratio may be 110 or more and 200 or less, 113 or more and 150 or less, or 115 or more and 140 or less.

As the NP is adjusted within the above range, it is possible to exhibit cell characteristics equivalent to or better than existing ones even though the amount of artificial graphite is decreased and the amount of natural graphite is increased. That is, when the NP is designed and adjusted to fall within the above range, a large amount of residual negative electrode may be obtained, so that the lithium secondary battery has characteristics capable of preventing cell degradation from being accelerated even though the amount of artificial graphite is decreased and the amount of natural graphite is increased.

In general, the NP ratio may satisfy the following Equation A. N/P ratio = Discharge capacitance per unit area of the negative electrode/Discharge capacitance per unit area of the positive electrode x 100

As used herein, the "discharge capacity per unit area" refers to the discharge capacity per unit area in the first cycle of a negative electrode or positive electrode.

The discharge capacity per unit area of the negative electrode may be obtained by the following method. Specifically, a half-cell is manufactured with a negative electrode sample including a negative electrode active material and a counter electrode (for example, a lithium metal electrode) facing the negative electrode sample. The "discharge capacity of the negative electrode sample per unit weight of the negative electrode active material" is obtained by dividing a discharge capacity measured by charging and discharging the half-cell by the weight of the negative electrode active material. A secondary battery is manufactured with a negative electrode including the same negative electrode active material as the negative electrode active material used in the half-cell and a positive electrode including the positive electrode active material. The discharge capacity per unit area of the negative electrode may be obtained by multiplying the "discharge capacity of the negative electrode sample per unit weight of the negative electrode active material" by the weight of the negative electrode active material included in the secondary battery and dividing the resulting value by the area of the negative electrode included in the secondary battery.

The discharge capacity per unit area of the positive electrode may be obtained by the following method. Specifically, a half-cell is manufactured with a positive electrode sample including a positive electrode active material and a counter electrode (for example, a lithium metal electrode) facing the positive electrode sample. The "discharge capacity of the positive electrode sample per unit weight of the positive electrode active material" is obtained by dividing a discharge capacity measured by charging and discharging the half-cell by the weight of the positive electrode active material. A secondary battery is manufactured with a positive electrode including the same positive electrode active material as the positive electrode active material used in the half-cell and a negative electrode including the negative electrode active material. The discharge capacity per unit area of the positive electrode may be obtained by multiplying the "discharge capacity of the positive electrode sample per unit weight of the positive electrode active material" by the weight of the positive electrode active material included in the secondary battery and dividing the resulting value by the area of the positive electrode included in the secondary battery.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Preparation Examples>

### <Manufacture of secondary battery>

### <Example>

A carbon-based active material (artificial graphite (D50 = 18 µm): natural graphite (D50 = 18 µm) = 50:50, carbon black, SBR as a binder, and CMC as a thickener were added at a weight ratio of 95.7:1:2.3:1 to distilled water as a solvent for forming a negative electrode slurry to prepare a negative electrode slurry (solid concentration 50 wt%).

As a mixing method, carbon black, a binder and water were dispersed using a homo mixer at 2500 rpm for 30 minutes, and then an active material (artificial graphite, natural graphite) was added and then dispersed at 2500 rpm for 30 minutes to prepare a slurry.

Both surfaces of a copper current collector (thickness: 15 µm) as a negative electrode current collector were coated with the negative electrode slurry in a loading amount of 5.48 mAh/cm², and the copper current collector was dried in a vacuum oven at 130°C for 1 hour and roll-pressed to form a negative electrode active material layer. (negative electrode porosity 35%)

A positive electrode slurry was prepared by adding LiNi_{0.6}Co_{0.2}Mn_{0.2}O₂ (average particle diameter (D50): 15 µm) as a positive electrode active material, carbon black (product name: Super C65, manufacturer: Timcal) as a conductive material, and polyvinylidene fluoride (PVdF) as a binder at a weight ratio of 95:2.5:2.5 to N-methyl-2-pyrrolidone (NMP) as a solvent for forming a positive electrode slurry (solid concentration of 63 wt%).

Both surfaces of an aluminum current collector (thickness: 15 µm) as a positive electrode current collector were coated with the positive electrode slurry in a loading amount of 4.0 mAh/cm², and the aluminum current collector was dried in a vacuum oven at 130°C for 1 hour and roll-pressed to form a positive electrode active material layer, thereby manufacturing a positive electrode (porosity of the positive electrode: 25%).

A lithium secondary battery was manufactured by interposing a polyethylene separator between the positive electrode and the negative electrode of the Example and injecting an electrolyte thereinto. (NP ratio 137 based on 4.2 V to 2V)

### <Comparative Example>

A carbon-based active material (artificial graphite (D50 = 18 µm): natural graphite (D50 = 18 µm) = 80:20, carbon black, SBR as a binder, and CMC as a thickener were added at a weight ratio of 95.7:1:2.3:1 to distilled water as a solvent for forming a negative electrode slurry to prepare a negative electrode slurry (solid concentration 50 wt%).

As a mixing method, carbon black, a binder and water were dispersed using a homo mixer at 2500 rpm for 30 minutes, and then an active material (artificial graphite, natural graphite) was added and then dispersed at 2500 rpm for 30 minutes to prepare a slurry.

Both surfaces of a copper current collector (thickness: 15 µm) as a negative electrode current collector were coated with the negative electrode slurry in a loading amount of 5.48 mAh/cm², and the copper current collector was dried in a vacuum oven at 130°C for 1 hour and roll-pressed to form a negative electrode active material layer. (negative electrode porosity 35%)

A positive electrode slurry was prepared by adding LiNi_{0.6}Co_{0.2}Mn_{0.2}O₂ (average particle diameter (D50): 15 µm) as a positive electrode active material, carbon black (product name: Super C65, manufacturer: Timcal) as a conductive material, and polyvinylidene fluoride (PVdF) as a binder at a weight ratio of 95:2.5:2.5 to N-methyl-2-pyrrolidone (NMP) as a solvent for forming a positive electrode slurry (solid concentration of 63 wt%).

Both surfaces of an aluminum current collector (thickness: 15 µm) as a positive electrode current collector were coated with the positive electrode slurry in a loading amount of 4.0 mAh/cm², and the aluminum current collector was dried in a vacuum oven at 130°C for 1 hour and roll-pressed to form a positive electrode active material layer, thereby manufacturing a positive electrode (porosity of the positive electrode: 25%).

A lithium secondary battery was manufactured by interposing a polyethylene separator between the positive electrode and the negative electrode of the Comparative Example and injecting an electrolyte thereinto. (NP ratio 137 based on 4.2 V to 2V)

**[Table 1]**

| | Artificial graphite:Natural graphite:Additional active material | Natural graphite initial capacity (mAh/g) | Artificial graphite initial capacity (mAh/g) | Negative electrode loading amount (mAh/cm²) | NP Ratio (based on 4.2 V to 2 V) |
|---|---|---|---|---|---|
| Example | 50:50:0 | 364 | 350 | 5.48 | 137 |
| Comparative Example | 80:20:0 | 364 | 350 | 5.48 | 137 |

### Experimental Example 1: Evaluation of service life characteristics

The secondary batteries including the negative electrodes manufactured in the Example and the Comparative Example were subjected to service life evaluation for three cells each using an electrochemical charger/discharger and the capacity retention rate was evaluated. The secondary batteries were subjected to in-situ cycle test at 4.2-2.0V 1 C/0.5 C, and the capacity retention rates were measured by charging/discharging the secondary batteries at 0.33 C/0.33 C (4.2-2.0 V) every 50 cycles during the test. The following Table 2 shows an in-situ capacity retention rate rather than an RPT capacity retention rate. Capacity retention rate (%) = {(Discharge capacity in the Nth cycle)/(Discharge capacity in the 1st cycle)} X 100

### Experimental Example 2: Evaluation of resistance increase rate measurement

After the capacity retention rates were measured by charging/discharging the secondary batteries at 0.33 C/0.33 C (4.2-2.0 V) every 50 cycles during the test in Experimental Example 1, the resistance increase rates were compared and analyzed by discharging the secondary batteries at 2.5 C pulse in SOC50 to measure the resistance.

Further, for the evaluation of the service life characteristics and the evaluation of the resistance increase rate measurement, data at 100 cycles, 200 cycles, and 400 cycles was each calculated, and the results are shown in the following Table 2.

In the following Table 2, a service life evaluation was performed on each of three secondary batteries of each of the Examples, which are labeled as Examples 1 to 3, a service life evaluation was performed on three secondary batteries of each of the Comparative Examples, which are labeled as Comparative Examples 1 to 3, and the average and standard deviation values of Examples 1 to 3 and the average and standard deviation values of Comparative Examples 1 to 3 are recorded, respectively.

**[Table 2]**

| | 1^{st} 0.33 C discharge capacity (mAh) | 100^{th} capacity retention rate (%) | 200^{th} capacity retention rate (%) | 400^{th} capacity retention rate (%) | 2.5 C charge 30 second resistance (R_{30sec,} ohm) | 2.5 C discharge 30 second resistance (R_{30sec,} ohm) |
|---|---|---|---|---|---|---|
| Example 1 | 88.9 | 93.3 | 88.3 | 80.8 | 1.12 | 1.21 |
| Example 2 | 89.1 | 91.6 | 87.5 | 79.7 | 1.14 | 1.26 |
| Example 3 | 89.7 | 91 | 86.3 | 77.4 | 1.15 | 1.3 |
| Average | 89.2 | 92.0 | 87.4 | 79.3 | 1.1 | 1.3 |
| Standard deviation | 0.42 | 1.19 | 1.01 | 1.73 | 0.02 | 0.05 |
| Comparative Example 1 | 87.7 | 91.6 | 86.4 | 80.1 | 1.22 | 1.28 |
| Comparative Example 2 | 88.7 | 92.7 | 88.5 | 78.6 | 1.14 | 1.33 |
| Comparative Example 3 | 89.2 | 88 | 84.1 | 75.1 | 1.19 | 1.46 |
| Average | 88.5 | 90.8 | 86.3 | 77.9 | 1.2 | 1.4 |
| Standard deviation | 0.76 | 2.46 | 2.20 | 2.57 | 0.04 | 0.09 |

As can be confirmed in Tables 1 and 2 above, it could be confirmed that the lithium secondary battery according to the example of the present application includes an artificial graphite having an initial capacity of 330 mAh/g or more in an amount of 1 part by weight or more and 50 parts by weight or less based on 100 parts by weight of a carbon-based active material, and can have a large amount of residual negative electrode as the NP ratio is adjusted to 110 or more, so that cell degradation is not accelerated even though artificial graphite is used within the above range, and thus the service life characteristics and resistance characteristics are maintained as before or improved.

Additionally, it could be confirmed that in the case of the comparative example in which artificial graphite was used in an amount more than the range of the present application, it was difficult to manufacture an electrode due to the difficulty in handling the artificial graphite, and as a result, the standard deviation of the electrochemical performance values was larger than that of the example. That is, it could be seen that the battery of the comparative example was not suitable for mass production and did not have good processability. Therefore, it could be seen that when the NP ratio is 110 or more, it is desirable to include natural graphite which is easy to handle and simultaneously use a specific weight of the artificial graphite according to the present application.

## Claims

1. A lithium secondary battery comprising:
a positive electrode;
a negative electrode;
a separator provided between the positive electrode and the negative electrode; and
an electrolyte,
wherein the negative electrode comprises a negative electrode current collector layer; and a negative electrode active material layer comprising a negative electrode active material layer composition provided on one surface or both surfaces of the negative electrode current collector layer,
the negative electrode active material layer composition comprises a carbon-based active material,
an artificial graphite having an initial capacity of 330 mAh/g or more is included in an amount of 1 part by weight or more and 50 parts by weight or less based on 100 parts by weight of the carbon-based active material, and
an NP ratio is 110 or more.

2. The lithium secondary battery of claim 1, wherein the carbon-based active material comprises an artificial graphite having an initial capacity of 330 mAh/g or more and natural graphite, and
a weight ratio of the artificial graphite : the natural graphite based on 100 parts by weight of the carbon-based active material is 1:99 to 50:50.

3. The lithium secondary battery of claim 1, wherein the negative electrode active material layer composition further comprises one or more selected from the group consisting of a silicon-based active material, a tin-based active material, a metal-based active material capable of forming an alloy with lithium, a lithium titanium oxide, and a lithium-containing nitride.

4. The lithium secondary battery of claim 1, wherein an NP ratio is 110 or more and 200 or less.

5. The lithium secondary battery of claim 3, wherein the negative electrode active material layer composition comprises a carbon-based active material and a silicon-based active material, and
the silicon-based active material is comprised in an amount of 50 parts by weight or less based on 100 parts by weight of the negative electrode active material layer composition.

6. The lithium secondary battery of claim 2, wherein the artificial graphite having an initial capacity of 330 mAh/g or more and the natural graphite are crystalline carbon.

7. The lithium secondary battery of claim 1, wherein the positive electrode comprises a positive electrode current collector layer; and a positive electrode active material layer comprising a positive electrode active material layer composition provided on one surface or both surfaces of the positive electrode current collector layer,and the positive electrode active material layer composition comprises one or more positive electrode active materials selected from the group consisting of LiNi_{xC}o_{y}Mn_{z02} (x+y+z=1); LiNiₐCo_{b}Mn_{c}Al_{d}O₂ (a+b+c+d=1); LiMn₂O₄; LiNi_{0.5}Mn_{1.5}O₂; and LiMₓFe_{y}PO₄ (M: a transition metal, x+y=1).

8. The lithium secondary battery of claim 7, wherein the positive electrode active material layer composition comprises LiNiₓCo_{y}Mn_{z}O₂ (x+y+z=1); or LiNiₐCo_{b}Mn_{c}Al_{d}O₂ (a+b+c+d=1),
z is 0.5 or more, and
c is 0.4 or more.

9. The lithium secondary battery of claim 1, wherein the negative electrode current collector layer has a thickness of 1 µm or more and 100 µm or less, and
the negative electrode active material layer has a thickness of 5 µm or more and 500 µm or less.

10. The lithium secondary battery of claim 7, wherein the positive electrode current collector layer has a thickness of 1 µm or more and 100 µm or less, and
the positive electrode active material layer has a thickness of 5 µm or more and 500 µm or less.
